(19) Europäisches Patentamt
European Patent Office
Office européen des brevets

(11) Veröffentlichungsnummer : **0 539 323 A1**

(12) **EUROPÄISCHE PATENTANMELDUNG**

(21) Anmeldenummer : 92810744.0

(22) Anmeldetag : 02.10.92

(51) Int. Cl.⁵ : **C08J 3/20**, C08J 3/215, C08J 3/22

(30) Priorität : **21.10.91 DE 4134683**

(43) Veröffentlichungstag der Anmeldung :
**28.04.93 Patentblatt 93/17**

(84) Benannte Vertragsstaaten :
**AT BE CH DE DK ES FR GB GR IE IT LI LU MC NL PT SE**

(71) Anmelder : **GEZOLAN AG**
**Werkstrasse 30**
**CH-6252 Dagmersellen (CH)**

(72) Erfinder : **Unger, Jacques**
**Ackerstrasse 9**
**CH-4800 Zofingen (CH)**

(74) Vertreter : **Rottmann, Maximilian R.**
**c/o Rottmann, Zimmermann + Partner AG**
**Glattalstrasse 37**
**CH-8052 Zürich (CH)**

(54) **Verfahren zur Herstellung von hitzevernetzbaren und/oder thermoplastischen Elastomer-Mischungen.**

(57)  Hitzevernetzbare und/oder thermoplastische Elastomer-Mischungen, insbesondere vulkanisierbare Kautschuk-Mischungen, werden hergestellt, indem in einer ersten Stufe in einem Ringschichtmischer das vorzerkleinerte Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird ; und anschliessend in einer zweiten Stufe das erhaltene Vorgemisch, allenfalls unter Zugabe der restlichen Zusatzstoffe, in einem chargenweise oder kontinuierlich arbeitenden Mischaggregat fertiggemischt wird. Es können dabei mindestens ein Teil des Weichmachers und mindestens ein Teil der restlichen Hilfsstoffe in eine oder mehrere Pasten überführt und diese in den Ringschichtmischer eingebracht werden. Man kann die Hilfsstoffe aufteilten und daraus mehrere Pasten herstellen. Zweckmässigerweise fasst man Hilfsstoffgruppen, welche für verschiedene Anwendungen gleichbleiben, zu jeweils einer Paste zusammen. Beispielsweise können zwei verschiedene Pasten herstellt werden, von denen die eine farbneutral, die andere farbstoffhaltig ist. Anderseits kann auch ein Teil der Hilfsstoffe in Pulverform direkt in den Ringschichtmischer eingebracht werden, und/oder es kann ein Teil der Hilfsstoffe direkt in das Mischaggregat eingebracht werden. Das Verfahren ist für alle bekannten Elastomere einsetzbar und bietet entscheidende Vorteile technischer, wirtschaftlicher und arbeitshygienischer Art.

EP 0 539 323 A1

Die Erfindung betrifft ein Verfahren zur Herstellung von hitzevernetzbaren und/oder thermoplastischen Elastomer-Mischungen, wie es in den Ansprüchen 1 bis 10 umschrieben ist.

Als "Thermoplastische Elstomere (TPE)" bezeichnet man bekanntlich Werkstoffe, bei denen elastomere Phasen (als weiche Komponente) in Kunststoffen (als harte Komponente) eingebunden sind. Je nach Art der Einbindung unterscheidet man Block-Copolymere und und Polyblends.

Weiter lassen sich die thermoplastischen Elastomere wie folgt unterteilen:

1 Typen mit hoher Härte

    1.1 Copolyester

    1.2 Polyether-Block-Amide

2 Typen mit niedriger Härte

    2.1 Thermoplastische Polyurethane (TPU)

        2.1.1 Polyetherurethane

        2.1.2 Polyesterurethane

    2.2 Thermoplastische Polyolefine (TPO)

        2.2.1 Ethylen-Propylen-Dien-Elastomer/Polypropylen (EPDM/PP)

        2.2.2 Acrylnitril-Butadien-Copolymer/Polypropylen (NBR/PP)

    2.3 Styrol-Block-Copolymere

        2.3.1 Styrol-Butadien-Styrol-Dreiblockcopolymer (SBS)

        2.3.2 Styrol-Ethylen/Butylen-Styrol-Dreiblockcopolymer (SEBS)

Die Herstellung von vernetzbaren und/oder thermoplastischen Elastomer-Mischungen, insbesondere von vulkanisierbaren Kautschuk-Mischungen, kann chargenweise oder kontinuierlich erfolgen, beispielsweise auf einem Walzwerk oder in einem Innenmischer. In jedem Falle ist die Dauer der Mischvorganges beträchtlich, so dass nur mässige Durchsätze erzielt werden können.

Bei Einsatz eines Innenmischers erwärmte sich bei den angewendeten Umdrehungszahlen die Rohkautschuk-Mischung jedoch stark, so dass bei vielen Mischungsrezepturen keine Vernetzungsreagentien zugesetzt werden konnten. Es war daher vielfach notwendig, entweder

- ein Walzwerk nachzuschalten, auf dem erst die aus dem Innenmischer entnommene Rohmischung mit Schwefel und Beschleunigern versetzt wurde,

oder aber

- in einem ersten Mischdurchgang im Innenmischer eine Vormischung ohne Schwefel und Beschleuniger herzustellen, diese dann abzukühlen und anschliessend in einem zweiten Mischdurchgang im Innenmischer unter Zugabe von Schwefel und Beschleunigern die fertige Mischung herzustellen.

Die Versuche, eine kontinuierliche Mischung in Mischextrudern zu erzielen scheiterten bisher am Zwang der Einhaltung einer bestimmten Reihenfolge der Zugabe der Hilfsstoffe. Berechnungen ergaben, dass dabei Spindellängen der Grössenordnung 40°D (wobei D den Spindeldurchmesser bedeutet) notwendig wären. Dies ist technisch schwierig zu bewerkstelligen und wirtschaftlich uninteressant.

Weiter war der Einsatz von weichgemachten Elastomeren oder der Zusatz grösserer Mengen an Weichmachern kritisch, da dann die in der Mischung erzeugbaren Scherkräfte für eine ordnungsgemässe Vermischung nicht mehr ausreichten.

Die der Erfindung zugrunde liegende Aufgabe war es nun, die Dauer des Mischens zu verkürzen und gleichzeitig den Einsatz von einfachen, leicht gebauten Mischaggregaten zu ermöglichen.

Diese Aufgabe wird erfindungsgemäss dadurch gelöst, dass

- in einer ersten Stufe in einem Ringschichtmischer das vorzerkleinerte Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird;

und anschliessend

- in einer zweiten Stufe das erhaltene Vorgemisch, allenfalls unter Zugabe der restlichen Zusatzstoffe, in einem chargenweise oder kontinuierlich arbeitenden Mischaggregat fertiggemischt wird.

Dabei übernimmt der Ringschichtmischer die Aufgabe, das Elastomer soweit aufzuschliessen, dass ein Vermischen mit den Hilfsstoffen möglich wird, und damit einen Grossteil des Mischvorganges, während im nachfolgenden Mischaggregat, beispielsweise einem Innenmischer oder einem Mischextruder, nur noch ein Nachmischen stattfindet. Diese Feststellung war in hohem Masse überraschend.

Als Hilfsstoffe kommen dabei alle bekannten Hilfsstoffgruppen in Frage, nämlich:

1 Vernetzungssysteme, insbesondere Vulkanisationsmittel.

2 Füllstoffe, und zwar:

    2.1 aktive Füllstoffe, welche eine massgebliche Verbesserung der mechanischen Eigenschaften, besonders der Zug-und Abreibfestigkeit, ergeben, beispielsweise aktive Russtypen, Kieselsäure, Aluminium- und Calciumsilikat sowie Zinkoxid; oder

2.2 inaktive Füllstoffe, welche keine qualitative Verbesserung der Vulkanisate ergeben, beispielsweise Calcium-und Magnesiumcarbonat, Kaolin, Schwerspat, Kieselgur und verschiedene Tone;

2.3 bei nicht russgefüllten Elastomeren: Farbstoffe, und zwar:

2.3.1 anorganische Pigmente, beispielsweise Lithopone, Titandioxid, Eisenoxid, Chromoxidgrün; oder

2.3.2 organische Farbstoffe, beispielsweise Azo-, Alizarin- und Phthalocyanin-Farbstoffe.

3 Weichmacher zur Verbesserung der Verarbeitbarkeit, der Elastizität und des Kälteverhaltens, und zwar:

3.1 für unpolare oder schwach polare Rohkautschuk-Typen (beispielsweise Naturkautschuk (NR), Styrol-Butadien-Copolymere (SBR), Polybutadien (BR), Isobutylen-Isopren -Copolymere (IIR)): Mineralölprodukte;

3.2 für stärker polare Typen (beispielsweise Acrylnitril-Butadien -Copolymere (NBR) und Polychlorbutatadien (CR): Phthalsäureester (beispielsweise Dibutyl- und Dioctylphthalat), Phosphorsäureester (beispielsweise Trikresylphosphat) und aromatische Mineralöle.

3.3 Weitere Verarbeitungshilfsstoffe, beispielsweise Faktisse (d.h. mit Schwefel oder Chlorschwefel behandelte pflanzliche Öle), Wollfett, Weichparaffin, Weich-Polyethylen, Bitumen und Pech.

4 Alterungsschutzmittel zur Verbesserung der Beständigkeit des fertigen Vulkanisates gegenüber Sauerstoff, Lichteinwirkung und dynamischer Beanspruchung, und zwar:

4.1 zum Schutz von Elsatomeren, deren Makromoleküle Doppelbindungen enthalten, gegen Sauerstoff und Ozon: Antioxydantien, beispielsweise Amine oder Phenole;

4.2 Lichtschutzmittel, insbesondere paraffinische Substanzen, beispielsweise Ceresin und Ozokerit;

4.3 zur Verzögerung der Hydrolyse von zur Hydrolyse neigenden Elastomeren (beispielsweise Polyurethan-Elastomeren (PU) und Ethylen-Vinylacetat-Copolymeren (EVA)): Polycarbodiimine.

5 Sonstige Hilfsstoffe, und zwar:

5.1 Mittel zur Beeinflussung der Klebrigkeit, nämlich:

5.1.1 Mittel, welche das unerwünschte Ankleben des Rohkautschukes bei der Verarbeitung vermindern, beispielsweise Paraffin, Wollfett, Stearinsäure und deren Salze;

5.1.2 Mittel, welche die Klebrigkeit des Rohkautschukes beim Konfektionieren verbessern, beispielsweise Kolophonium, Cumaronharze, Alkylphenol-Acetylen -Kondensate sowie niedermolekulare Polyethylene.

5.2 Haftmittel, welche notwendig sind zur Herstellung fester Verbindungen von Elastomeren und Metallen sowie von Verbundmaterialien mit Geweben, beispielsweise bei Reifenkonstruktionen und für Tranportbänder, und zwar:

5.2.1 zur der Herstellung metallischer Verbundmaterialien: beispielsweise Kobaltnaphthenat, Resorcinharz sowie erhöhte Schwefelmengen;

5.2.2 zur Herstellung textiler Verbundmaterialien: beispielsweise Styrol-Butadien-VinylpyridinTerpolymere zusammen mit Resorcin-Formaldehyd-Harzen und speziellen Isocyanaten.

5.3 Treibmittel für die Herstellung von porösen Vulkanisaten, beispielsweise Sulfohydrazide (wie Benzolsulfohydrazid), Nitrosoverbindungen (wie Dinitrosopentamethylentetramin oder Ammoniumbicarbonat.

Die Hilfsstoffe können in aller Regel in den handelsüblichen Korngrössen im my-Bereich eingesetzt werden. Falls ihr Einsatz in Pastenform erfolgt, wird dadurch die Möglichkeit geschaffen, diese weiterzuveredeln, insbesondere feinstzumahlen, zu dispergieren oder zu entgasen. Dadurch können grobkörnigere und daher billigere Hilfsstoffe, beispielsweise Russe, eingesetzt werden.

Bei der Durchführung des erfindungsgemässen Verfahrens wird zweckmässig so vorgegangen, dass der Ringschichtmischer mit allen erforderlichen Hilfsstoffen beschickt wird.

Man kann dabei so vorgehen, dass aus sämtlichen Hilfsstoffen eine einzige Paste hergestellt wird, welche in den Ringschichtmischer eingebracht wird.

Man kann aber auch so vorgehen, dass die Hilfsstoffe aufgeteilt und daraus mehrere Pasten, insbesondere zwei Pasten, hergestellt werden, welche dann einzeln oder nach vorheriger Vermischung in den Ringschichtmischer eingebracht werden. Dieses Vorgehen hat den Vorteil, dass man die eine Paste farbneutral und die andere Paste farbstoffhaltig herstellen kann. Auf diese Weise kann erreicht werden dass die farbneutrale Paste für die Herstellung verschieden gefärbter Elastomer-Mischungen eingesetzt werden kann und nur die farbstoffhaltige Paste dem jeweiligen Farbton angepasst werden muss.

Da das homogene Vermischen verschiedener Bestandteile umso leichter möglich ist, je gleicher die einzelnen Mengen einander sind, ist es zweckmässig, aus Hilfstoffen, welche nur in vergleichsweise geringen Mengen benötigt werden, zunächst eine Vorpaste herzustellen und diese vor dem Vermischen mit dem Elastomer mit der anderen bzw. einer der anderen Pasten zu vermischen.

Wenn aus den erwähnten Hilfsstoffen Pasten hergestellt werden sollen, ist es selbstverständlich notwendig, dass die Menge der flüssigen Hilfsstoffe, insbesondere der Weichmacher, hoch genug ist.

Anderseits kann auch ein Teil der Hilfstoffe in Pulverform in den Ringschichtmischer eingebracht werden, und/oder es kann ein Teil der Hilfsstoffe direkt ins Mischaggregat eingebracht werden. Letzteres ist insbesondere dann sinnvoll, wenn hochgefüllte Mischungen hergestellt werden sollen, bei denen die Menge an Weichmacher im Verhältnis zu den Füllstoffen niedrig ist.

Der als Vormischer eingesetzte Ringschichtmischer weist bekanntlich als Mischelement eine Welle mit Zacken auf, welche in einem glatten Rohr mit hoher Geschwindigkeit, beispielsweise 2000 U/min, rotiert. Dadurch wird an der Rohrwand eine turbulente Ringschicht erzeugt, wobei in dieser Zone der Aufschluss des Elastomers und dessen Vermischen praktisch ausschliesslich durch die infolge der Turbulenz entstehenden hohen Reibungskräfte bewerkstelligt wird.

Das erfindungsgemässe Verfahren kann für die Herstellung von vernetzbaren oder thermoplastischen Elastomer-Mischungen aus allen bekannten vernetzbaren oder thermoplastischen Elastomeren Anwendung finden, insbesondere solchen aus:
- Naturkautschuk (NR),
- sythetischem cis-1,4-Polyisopren (IR),
- cis-1,4-Polybutadien (BR),
- Styrol-Butatien-Copolymer (SBR),
- Acrylnitril-Butadien-Copolymeren (NBR),
- Poly-2-chlorbutatadien (CR),
- Isobutylen-Isopren-Copolymeren (IIR),
- Ethylen-Propylen-Dien-Terpolymeren (EPDM),
- Ethylen-Propylen-Copolymeren (EPM),
- Ethylen-Vinylacetat-Copolymeren (EVA),
- Polyurethan-Elastomeren (PU),
- Polysulfid-Elastomeren (PSR),
- Polyacrylat-Elastomeren (AR),
- Polyepichlorhydrin-Elastomeren (CHR),
- Sulfochloriertem Polyethylen (CSM),
- Fluor-Elastomeren (FE),
- Silicon-Elastomeren (SIR),
- 1,5-trans-Polypentenamer (TPR),
- Ethylen-Propylen-Dien-Elastomer/Polypropylen-Polyblend (EPDM/PP),
- Acrylnitril-Butadien-Copolymer/Polypropylen-Polyblend (NBR/PP),
- Styrol-Butadien-Styrol-Dreiblockcopolymer (SBS),
- Styrol-Ethylen/Butylen-Styrol-Dreiblockcopolymer (SEBS).

Das erfindungsgemässe Verfahren weist im Vergleich zum Stand der Technik eine ganze Anzahl entscheidender Vorteile auf:
- Die Vermischung der Hilfsstoffe ist äusserst einfach und energiesparend, und sie kann in einem einzigen Durchgang erfolgen.
- Die gesamte Mischzeit wird wesentlich verkürzt, gleichgültig, ob das dem Ringschichtmischer nachgeschaltete Mischaggregat kontinuierlich oder chargenweise arbeitet. Im letzteren Falle ist das Vorgemisch selbstverständlich zu lagern, bis es für die nächste Charge in das Mischaggregat eingebracht werden kann.
- Wenn die Hilfsstoffe in Pastenform eingesetzt werden, so kann staubfrei und damit arbeitshygienisch vorteilhaft gearbeitet werden.
- Für die Fertigstellung der Mischung kann ein chargenweise arbeitender Kneter, beispielsweise ein Innenmischer, eingesetzt werden.
- Soll die Fertigstellung der Mischung kontinuierlich erfolgen, so kann als kontinuierlich arbeitendes Mischaggregat ein einfacher, leicht gebauter Mischextruder eingesetzt werden, welcher mit einer geringen Umdrehungszahl, beispielsweise 100 U/min, arbeitet. Eine Spindellänge von 12°D bis 18°D ist durchaus ausreichend. Derartige Mischextruder weisen im Vergleich zu den Mischvorrichtungen nach dem Stand der Technik einen äusserst grossen Durchsatz auf.
- Gleichzeitig ist das Fertigstellen der Mischungen äusserst energiesparend, da das Elastomer nach dem Austragen aus dem Ringschichtmischer bereits in Pulver- oder Granulat-Form vorliegt und vorgewärmt ist und nicht erst im folgenden Mischaggregat durch Wärme fliessbar oder knetbar gemacht werden muss. Dementsprechend entfällt die bisher notwendige mechanische Überdimensionierung des Mischaggregates.

- Die eingesetzten Elastomere können an sich weichmacherfrei sein. Dies erleichtert nicht nur ihre Pulverisierung bzw. Granulierung, sondern vermeidet auch, dass infolge zu niedriger Scherkräfte eine wirksame Vermischung nicht mehr stattfinden kann.

Beispiele 1 bis 3

Aus den folgenden Bestandteilen werden in der nachstehend beschriebenen Weise drei vulkanisierbare Kautschuk-Mischungen hergestellt.

| Nr. | Komponente | Gew.-Teile | Gew.-Teile |
|-----|------------|------------|------------|
| 1 | BUNA AP 447 [1)] | | 100,0 |
| 2 | Zinkoxid RS | | 5,0 |
| 3.1 | Stearinsäure | 1,0 | |
| 3.2 | Stearinsäure | 1,0 | |
| 3 | Total Stearinsäure | | 2,0 |
| 4 | Kreide | | 250,0 |
| 5.1 | Paraffin./naphthen. Mineralöl | 70,0 | |
| 5.2 | Paraffin./naphthen. Mineralöl | 10,0 | |
| 5 | Total Paraffin./naphthen. Mineralöl | | 80,0 |
| 6 | Eisenoxidrot | | 6,0 |
| 7 | Schwefel | | 7,0 |
| 8 | VULKACIT CZ [2)] | | 1,0 |
| 9 | VULCACIT LDA [3)] | | 1,0 |
| 10 | VULCACIT Thiuram [4)] | | 0,4 |
| | Total | | 452,4 |

1) EDPM

= Ethylen-Propylen-Dien-Terpolymer Korngrösse < 10 mm

2) CBS

= Benzodiacyl-2-cyclohexyl-sulfenamid

3) ZDEC

= Zink-N-diethyl-dithiocarbamat

4) TMTB

= Tetramethyl-thiuramdisulfid

Beispiel 1

Sämtliche Hilfsstoffe (Nr. 2, 3, 4, 5, 6, 7, 8, 9 und 10) werden zu einer einzigen Paste vermischt. Diese Paste wird, gegebenenfalls nach anschliessender Homogenisierung, zusammen mit dem Elastomer (Nr. 1) in einem Ringschichtmischer unter Aufschluss des Elastomers vorgemischt. Darauf wird das erhaltene Vorgemisch in einem chargenweise arbeitenden Innenmischer oder in den Materialzufuhrbereich eines Mischextruders eingebracht.

Beispiel 2

Die Hilfsstoffe Nr. 2, 3.1, 4, 5.1, 7, 8, 9 und 10 werden zu einer farbneutralen Paste und die Hilfsstoffe Nr. 3.2, 5.2 und 6 zu einer farbstoffhaltigen Paste vermischt. Diese Pasten werden, gegebenenfalls nach vorgängiger Homogenisierung, mit dem Elastomer (Nr. 1) in einem Ringschichtmischer unter Aufschluss des Elastomers vorgemischt. Darauf wird das erhaltene Vorgemisch in einem chargenweise arbeitenden Innenmischer oder in den Materialzufuhrbereich eines Mischextruders eingebracht.

Beispiel 3

Die Hilfsstoffe Nr. 2, 3, 7, 8, 9 und 10 werden zu einer Vorpaste und die Hilfsstoffe Nr. 4, 5 und 6 zu einer Hauptpaste vermischt. Dann werden die beiden Pasten vereinigt. Die vereinigte einzige Paste wird, gegebenenfalls nach anschliessender Homogenisierung, mit dem Elastomer (Nr. 1) in einem Ringschichtmischer unter Aufschluss des Elastomers vorgemischt. Darauf wird das erhaltene Vorgemisch in einem chargenweise arbeitenden Innenmischer oder in den Materialzufuhrbereich eines Mischextruders eingebracht.

Beispiel 4

Eine typische Reifenmischung wird hergestellt aus:

| 100 | Gew.-Teilen Kautschuk, |
|---|---|
| 10 | Gew.-Teilen Weichmacheröl, |
| 60 bis 80 | Gew.-Teilen Russ, und |
| 8 bis 10 | Gew.-Teilen übrige Hilfsstoffe (einschliesslich Schwefel). |

Dabei werden der Kauschuk, das Weichmacheröl und die übrigen Hilfsstoffe in einem mit 2000 U/min rotierenden Ringschichtmischer kontinuierlich vorgemischt. Die erhaltene Masse wie auch der Russ werden dann in einen chargenweise arbeitenden Kneter, beispielsweise einen Innenmischer, oder einen kontinuierlich arbeitenden Mischextruder eingebracht. Dort wird das Elastomergemisch fertiggemischt.

**Patentansprüche**

1. Verfahren zur Herstellung von hitzevernetzbaren und/oder thermoplastischen Elastomer-Mischungen durch zweistufiges Mischen des Elastomers mit Weichmacheröl und anderen Zusatzstoffen, dadurch gekennzeichnet, dass

   - in einer ersten Stufe in einem Ringschichtmischer das vorzerkleinerte Elastomer mit mindestens einem Teil des Weichmachers, und gegebenenfalls mit mindestens einem Teil der übrigen Zusatzstoffe, zu einem Vorgemisch, in welchem das Elastomer aufgeschlossen ist und die Zusatzstoffe in die Polymermatrix eingebunden sind, kontinuierlich vorgemischt wird; und anschliessend

   - in einer zweiten Stufe das erhaltene Vorgemisch, allenfalls unter Zugabe der restlichen Zusatzstoffe, in einem chargenweise oder kontinuierlich arbeitenden Mischaggregat fertiggemischt wird.

2. Verfahren nach Anspruch 1, dadurch gekennzeichnet, dass der Ringschichtmischer der ersten Stufe mit allen erforderlichen Zusatzstoffen beschickt wird.

3. Verfahren nach Anspruch 2, dadurch gekennzeichnet, dass aus sämtlichen Zusatzstoffen eine einzige Paste hergestellt und diese in den Ringschichtmischer der ersten Stufe eingebracht wird.

4. Verfahren nach Anspruch 2, dadurch gekennzeichnet, dass die Zusatzstoffe aufgeteilt und daraus mehrere Pasten, insbesondere zwei Pasten, hergestellt und diese in den Ringschichtmischer der ersten Stufe eingebracht werden.

5. Verfahren nach Anspruch 4, dadurch gekennzeichnet, dass eine Paste farbneutral und eine andere Paste farbstoffhaltig hergestellt wird.

6. Verfahren nach Anspruch 3 oder 4, dadurch gekennzeichnet, dass die Paste bzw. Pasten vor dem Einbringen in den Ringschichtmischer der ersten Stufe, insbesondere durch Feistmahlen, Dispergieren oder Entgasen, veredelt wird bzw. werden.

7. Verfahren nach einem oder mehreren der Ansprüche 4 bis 6, dadurch gekennzeichnet, dass die Pasten einzeln in den Ringschichtmischer der ersten Stufe eingebracht werden.

8. Verfahren nach einem oder mehreren der Ansprüche 4 bis 6, dadurch gekennzeichnet, dass aus einem Teil der Zusatzstoffe eine Vorpaste hergestellt und diese vor dem Einbringen in den Ringschichtmischer der ersten Stufe mit der anderen bzw. einer der anderen Pasten vermischt wird.

9. Verfahren nach Anspruch 1 oder 2, dadurch gekennzeichnet, dass mindestens ein Teil der Zusatzstoffe in Pulverform in den Ringschichtmischer der ersten Stufe eingebracht wird.

10. Verfahren nach Anspruch 1, dadurch gekennzeichnet, dass ein Teil der Zusatzstoffe in Pulver- oder Pastenform direkt ins Mischaggregat der zweiten Stufe eingebracht wird.

Europäisches
Patentamt

**EUROPÄISCHER RECHERCHENBERICHT**

Nummer der Anmeldung

EP     92 81 0744

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-956 508 (DRAISWERKE G.M.B.H.) <br> * Ansprüche 1,2,4 * <br> --- | 1,9 | C08J3/20 <br> C08J3/215 <br> C08J3/22 |
| A | DE-A-2 625 077 (LÖDIGE WILHEM) <br> * das ganze Dokument * <br> --- | 1 | |
| A | US-A-2 868 517 (LASCH ALBERT) <br> * Ansprüche 1,2 * <br> * Spalte 1, Zeile 14 – Zeile 23 * <br> * Spalte 2, Zeile 7 – Zeile 16 * <br> * Abbildung 1 * <br> ----- | 1 | |
| | | | **RECHERCHIERTE SACHGEBIETE (Int. Cl.5)** <br><br> C08J <br> B29C <br> B29B <br> B01F |

Der vorliegende Recherchenbericht wurde für alle Patentansprüche erstellt

| Recherchenort | Abschlußdatum der Recherche | Prüfer |
|---|---|---|
| DEN HAAG | 30 DEZEMBER 1992 | NIAOUNAKIS M. |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
　　　Dokument

EPO FORM 1503 03.82 (P0403)